(19) Europäisches Patentamt
European Patent Office
Office européen des brevets

(11) EP 3 916 940 A1

(12) **EUROPÄISCHE PATENTANMELDUNG**

(43) Veröffentlichungstag:
**01.12.2021 Patentblatt 2021/48**

(21) Anmeldenummer: **20177176.3**

(22) Anmeldetag: **28.05.2020**

(51) Int Cl.:
*H02H 3/06* (2006.01)     *H02H 3/07* (2006.01)
*H02H 7/30* (2006.01)     *H02H 3/033* (2006.01)
*H02H 3/093* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Murrelektronik GmbH**
**71570 Oppenweiler (DE)**

(72) Erfinder:
• **Pan, Hangwen**
**71522 Backnang (DE)**
• **Matheis, Nils**
**71549 Auenwald (DE)**
• **Lang, Rudolf**
**71576 Burgstetten (DE)**

(74) Vertreter: **Wasmuth, Rolf et al**
**Patentanwälte**
**Dipl.Ing. W. Jackisch & Partner mbB**
**Menzelstrasse 40**
**70192 Stuttgart (DE)**

(54) **SCHALTUNGSANORDNUNG MIT KASKADIERTEN ELEKTRONISCHEN SCHUTZSCHALTERN UND VERFAHREN ZUR INBETRIEBNAHME DER SCHALTUNGSANORDNUNG**

(57) Die Erfindung betrifft eine Schaltungsanordnung zur Spannungsversorgung von Einzellasten (B1, B2,···, Ba) über einen ersten übergeordneten elektronischen Schutzschalter (ESS-A1), dem zumindest zwei weitere untergeordnete elektronische Schutzschalter (ESS-B1, ESS-B2) mit Einzellasten (B1, B2,···, Ba) nachgeordnet sind. Der Eingang (30) des untergeordneten Schutzschalters (ESS-B1, ESS-B2) ist an den Ausgang (21) des übergeordneten Schutzschalters (ESS-A1) und die Einzellast (B1, B2) an dem Ausgang (31) des untergeordneten Schutzschalters (ESS-B1, ESS-B2) angeschlossen. Der Auslösewert ($I_{max\_B1}$) des untergeordneten elektronischen Schutzschalters (ESS-B1, ESS-B2) ist kleiner als der Auslösewert ($I_{max\_A1}$) des übergeordneten elektronischen Schutzschalters (ESS-A1), wobei nach einem Auslösen des übergeordneten Schutzschalters (ESS-A1) zunächst der übergeordnete Schutzschalter (ESS-A1) eingeschaltet und nach Ablauf einer Zeitspanne ($t_k$) sukzessive die untergeordneten Schutzschalter (ESS-B1, ESS-B2) nacheinander eingeschaltet werden.

EP 3 916 940 A1

*FIG. 1*

**Beschreibung**

Die Erfindung betrifft eine Schaltungsanordnung zur Spannungsversorgung einer aus Einzellasten zusammengesetzten Gesamtlast mit einem Netzteil zur Bereitstellung einer Versorgungsspannung. Zwischen der Gesamtlast und dem Netzteil ist ein elektronischer Schutzschalter mit einem Strompfad zwischen seinem Eingang und seinem Ausgang angeordnet. In dem Strompfad ist ein elektronisches Stellglied vorgesehen, welches den Strompfad schließt, um einen Laststrom zuzulassen oder den Strompfad öffnet, um den Laststrom zu sperren.

Dem elektronischen Schutzschalter ist eine Steuereinheit zugeordnet, die über eine Ansteuervorrichtung mit dem elektronischen Stellglied verbunden ist um den Strompfad zu öffnen und den Laststrom zu sperren, wenn der Laststrom zwischen dem Eingang und dem Ausgang des ersten elektronischen Schutzschalters über einen vorgesehenen Auslösewert ansteigt.

Ein derartiger elektronischer Schutzschalter ist aus der DE 10 2011 120 466 A1 bekannt.

Löst ein derartiger Schutzschalter aufgrund eines Kurzschlusses oder einem aus anderen Gründen auftretenden Strompeak aus, werden alle Einzellasten abgeschaltet, da der elektronische Schutzschalter der Gesamtlast zugeordnet ist. Liegt ein Kurzschluss in einer Last vor, ist eine Wiederinbetriebnahme des elektronischen Schutzschalters nicht möglich, da aufgrund des Kurzschlusses in einer Einzellast der zulässige Stromauslösewert des Schutzschalters wieder überschritten wird.

Der Erfindung liegt die Aufgabe zugrunde, eine Absicherung mehrerer an einem Netzteil betriebener Einzellasten vorzusehen, mit der selektiv die den Kurzschluss auslösende Last erkannt und vom Netz genommen werden kann.

Die Aufgabe wird nach den Merkmalen des Anspruchs 1 gelöst.

Nach der Erfindung ist vorgesehen, eine Kaskade aus Schutzschaltern vorzusehen, über die eine Gesamtlast an einem Netzteil betrieben wird. Die Kaskade besteht aus zumindest einem übergeordneten Schutzschalter, dem zumindest zwei weitere untergeordnete elektronische Schutzschalter nachgeordnet sind. Der nachgeordnete bzw. untergeordnete elektronische Schutzschalter weist einen zwischen seinem Eingang und seinem Ausgang ausgebildeten Strompfad mit einem Stellglied auf, welcher den Strompfad schließt, um einen Laststrom zuzulassen oder den Strompfad öffnet, um den Laststrom zu sperren. Dem untergeordneten elektronischen Schutzschalter ist eine Steuereinheit zugeordnet, über die das elektronische Stellglied angesteuert wird, um den Strompfad dann zu öffnen, wenn der Laststrom zwischen dem Eingang und dem Ausgang des untergeordneten elektronischen Schutzschalters über einen vorgegebenen zweiten Auslösewert ansteigt.

Der Eingang des untergeordneten Schutzschalters ist an den Ausgang des übergeordneten Schutzschalters angeschlossen. Eine Einzellast ist an dem Ausgang des untergeordneten Schutzschalters angeschlossen. Die Anordnung ist so vorgesehen, dass der zweite Auslösewert des untergeordneten elektronischen Schutzschalters kleiner ist als der erste Auslösewert des übergeordneten elektronischen Schutzschalters.

Die Steuereinheiten der Schutzschalter sind derart ausgebildet, dass nach einem Auslösen des übergeordneten Schutzschalters zunächst der übergeordnete Schutzschalter wieder eingeschaltet wird, um nach Ablauf einer Zeitspanne sukzessive die untergeordneten Schutzschalter nacheinander einzuschalten. Ergibt sich beim Einschalten der untergeordneten Schutzschalter ein erneuter Kurzschluss, wird der untergeordnete Schutzschalter sofort wieder abschalten, so dass ein Ansprechen des übergeordneten Schutzschalters vermieden ist. Es kann somit erkannt werden, welcher der untergeordneten Schutzschalter im Lastkreis einen Kurzschluss aufweist. Dieser mit dem Kurzschluss belastete Schutzschalter wird bleibend ausgeschaltet. Die weiteren untergeordneten Schutzschalter der gleichen unteren Ebene werden sukzessive eingeschaltet, so dass bis auf die mit Kurzschluss belastete Einzellast alle anderen Einzellasten der Gesamtlast wieder über den ersten Schutzschalter am Netz betrieben werden können.

Jeder der in der Kaskade verwendeten Schutzschalter hat eine Ansprechzeit zwischen dem Überschreiten eines Auslösewertes und dem Öffnen des Strompfades zum Sperren des Laststroms. In Weiterbildung der Erfindung ist vorgesehen, die Ansprechzeit eines untergeordneten Schutzschalters kleiner zu wählen als die Ansprechzeit eines übergeordneten Schutzschalters. Damit kann erreicht werden, dass im Kurzschlussfall der untergeordnete Schutzschalter früher auslöst als der übergeordnete Schutzschalter. Eine zu frühe Abschaltung der Gesamtlast durch Ansprechen des übergeordneten Schutzschalters kann so vermieden werden.

In besonderer Weiterbildung der Erfindung ist jeder Schutzschalter mit einem Kommunikationsmodul versehen, so dass innerhalb der Schaltungsanordnung eine Kommunikation mit jedem der verbauten Schutzschalter möglich ist. Dadurch können zusätzliche Funktionalitäten erzielt werden, wie zum Beispiel eine Ferndiagnose, eine Fernansteuerung eines Schutzschalters, eine Meldefunktion oder dergleichen.

In besonderer Weiterbildung der Erfindung ist vorgesehen, einerseits den im Strompfad zwischen dem Eingang und dem Ausgang eines elektronischen Schutzschalters fließenden Laststrom über einen Strommesser zu erfassen. Zweckmäßig wird zwischen dem Eingang und dem Ausgang eines elektronischen Schutzschalters der Potenzialunterschied durch einen Spannungsmesser erfasst. Insbesondere wird der Strommesser und/oder der Spannungsmesser mit der Steuereinheit verbunden, um so in Abhängigkeit des Laststroms und/oder des Potenzialunterschieds ein Öffnen oder Schließen des Strompfades über das Stellglied eines Schutzschalters zu bewirken.

Ein Verfahren zur Inbetriebnahme einer Schaltungsanordnung zur Spannungsversorgung einer aus Einzellasten zusammengesetzten Gesamtlast ist im Anspruch 7 wiedergegeben. Die Schaltungsanordnung enthält zumindest ein Netzteil zur Bereitstellung einer Versorgungsspannung, einen übergeordneten elektronischen Schutzschalter zwischen der Gesamtlast und dem Netzteil mit einem im Strompfad zwischen dem Eingang und dem Ausgang angeordneten elektronischen Stellglied und einer Steuereinheit, die ausgebildet ist, das elektronische Stellglied im Strompfad zu öffnen und den Laststrom zu sperren, wenn der Strom im Strompfad einen vorgegebenen ersten Auslösewert übersteigt, sowie zumindest zwei mit jeweils einer Einzellast verbundene untergeordnete elektronische Schutzschalter.

Jeder untergeordnete elektronische Schutzschalter weist ebenfalls ein im Strompfad zwischen seinem Eingang und seinem Ausgang angeordnetes elektronisches Stellglied auf, welches von einer Steuereinheit bedient ist. Die Steuereinheit ist ausgebildet, um über eine Ansteuervorrichtung das elektronische Stellglied im Strompfad zu öffnen und den Laststrom zu sperren, wenn der Laststrom einen vorgegebenen zweiten Auslösewert übersteigt.

Der erste Auslösewert des übergeordneten elektronischen Schutzschalters ist dabei größer gewählt als der zweite Auslösewert des untergeordneten elektronischen Schutzschalters.

Zur Inbetriebnahme der Schaltungsanordnung wird zunächst das übergeordnete elektronische Stellglied seinen Strompfad schließen, während die Stellglieder der untergeordneten elektronischen Schutzschalter ihren jeweiligen Strompfad öffnen und einen Laststrom sperren. Nach einer ersten Zeitspanne wird an dem Ausgang des übergeordneten Schutzschalters eine Spannung anliegen und ein erster untergeordneter Schutzschalter seinen Strompfad für eine Einschaltzeit schließen und einen Laststrom zulassen. Der sich aufbauende Laststrom zwischen dem Eingang und dem Ausgang des untergeordneten Schutzschalters wird überwacht und bei einem Überschreiten des Laststroms über den zweiten Auslösewert das Stellglied den Strompfad des untergeordneten Schutzschalters öffnen und einen weiteren Laststrom sperren. Steigt der Laststrom nicht über den zweiten Auslösewert des untergeordneten Schutzschalters an, bleibt der Strompfad vorzugsweise geschlossen und ein Laststrom zugelassen. Stellt sich ein Laststrom zwischen einem Nennstrom $I_{n\_b1}$ und einem Maximalstrom $I_{max\_B1}$ ein, hängt der Schaltzustand des Schutzschalters von einer Strom-Zeit-Kennlinie ab.

Nunmehr wird ein weiterer untergeordneter Schutzschalter in der gleichen Weise in Betrieb genommen. Nach Abschluss der Inbetriebnahme aller weiteren untergeordneten elektronischen Schutzschalter ist die Schaltungsanordnung zur Versorgung der aus Einzellasten bestehenden Gesamtlast wieder in Betrieb. Lediglich der untergeordnete Schutzschalter mit einem Kurzschluss im Lastkreis hält seinen Strompfad offen, so dass die Last spannungslos bleibt. Der Zustand des untergeordneten Schutzschalters kann über ein Kommunikationsmodul einer Überwachung gemeldet werden oder mit einer Anzeige am Schutzschalter kenntlich gemacht werden.

Da ein Ansteigen des Laststroms über den Auslösewert des untergeordneten Schutzschalters nicht zwingend auf einen Kurzschluss hinweisen muss, sondern auch aufgrund einer vorhandenen Kapazität auftreten kann, ist vorgesehen, den untergeordneten elektronischen Schutzschalter für mehrere aufeinanderfolgende Einschaltzeiten in Betrieb zu nehmen, wobei zwischen aufeinanderfolgenden Einschaltzeiten eine Pause vorgesehen ist. Erst wenn der Auslösewert des untergeordneten Schutzschalters in mehreren Einschaltzeiten jeweils überschritten wird und die Spannung am Ausgang nicht ansteigt, ist ein Indiz für einen Kurzschluss gegeben. Vorteilhaft wird ein untergeordneter Schutzschalter bleibend eingeschaltet, wenn in aufeinanderfolgenden Einschaltzeiten der festgestellte Laststrom den Auslösewert nicht überschreitet. Vorteilhaft sind insbesondere drei aufeinanderfolgende Einschaltzeiten vorgesehen.

Jeder verwendete Schutzschalter weist eine Ansprechzeit zwischen einem Überschreiten eines Auslösewerts und dem Öffnen des Strompfades und Sperren des Laststroms auf. In der Schaltungsanordnung ist vorgesehen, dass die Ansprechzeit eines untergeordneten Schutzschalters kleiner gewählt ist als die Ansprechzeit eines übergeordneten Schutzschalters. Dadurch kann erreicht werden, dass zum Beispiel bei einem Kurzschluss nur der untergeordnete Schutzschalter auslöst und der übergeordnete Schutzschalter den Strompfad geschlossen hält. Die weiteren an den übergeordneten Schutzschalter angeschlossenen untergeordneten Schutzschalter werden so weiter mit Spannung versorgt. Ein Betrieb der weiteren Lasten ist gewährleistet.

Weitere Merkmale der Erfindung ergeben sich aus den weiteren Ansprüchen. Die sich aus den Ansprüchen, der Beschreibung und der Zeichnung ergebenden weiteren Merkmale können im Sinne der Erfindung miteinander beliebig kombiniert werden, um eine selektive Kaskadierung der Schutzschalter zu erzielen.

Ein Ausführungsbeispiel der erfindungsgemäßen Schaltungsanordnung ist in den Zeichnungen dargestellt und nachfolgend im Einzelnen beschrieben. Es zeigen:

Fig. 1:    ein schematisches Blockschaltbild einer erfindungsgemäßen Schaltungsanordnung,

Fig. 2:    ein schematisches Blockschaltbild des Grundaufbaus eines elektronischen übergeordneten und/oder eines untergeordneten Schutzschalters,

Fig. 3:    ein Schaubild des Laststroms über der Zeit,

Fig. 4 ein Schaubild des Spannungsverlaufs und des Stromverlaufs über der Zeit während der Inbetriebnahme der Schaltungsanordnung nach Fig. 1.

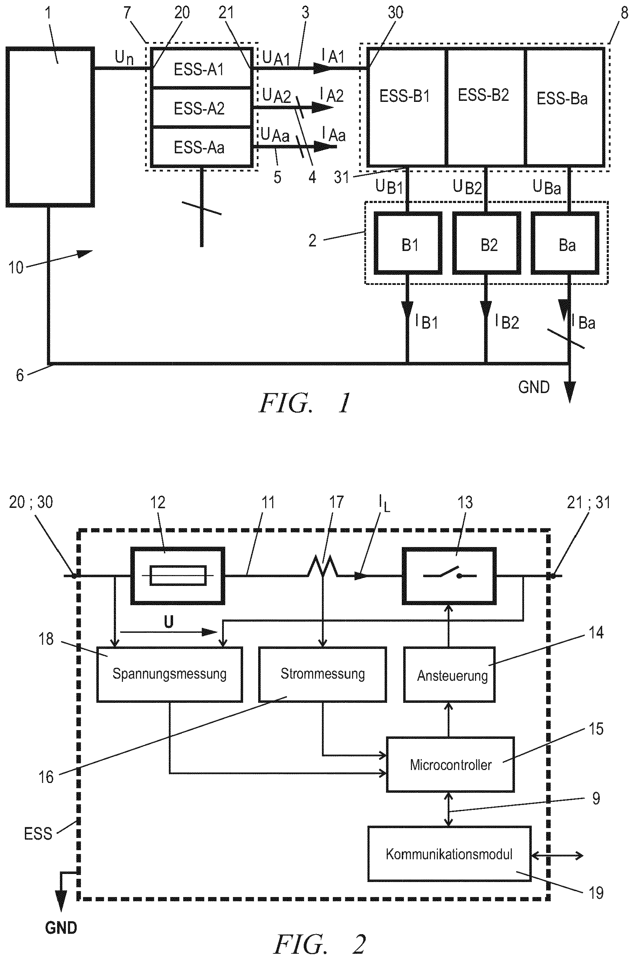

In Fig. 1 ist mit dem Bezugszeichen 1 ein Netzteil bezeichnet, welches eine Versorgungsspannung $U_n$ bereitstellt. Die Versorgungsspannung $U_n$ dient der elektrischen Versorgung von Einzellasten B1, B2 bis Ba. Die Einzellasten B1, B2 bis Ba bilden eine Gesamtlast 2 für einen ersten Schutzschalter ESS-A1.

Im gezeigten Ausführungsbeispiel nach Fig. 1 besteht die Schaltungsanordnung 10 aus mehreren insbesondere parallel geschalteten ersten Schutzschaltern ESS-A1, ESS-A2 bis ESS-Aa (a = 3, 4, ..., n). Diese ersten Schutzschalter ESS-A1, ESS-A2 bis ESS-Aa sind einer oberen Ebene 7 von Schutzschaltern zugeordnet. Jeder erste Schutzschalter ESS-A1, ESS-A2 bis ESS-Aa ist jeweils als übergeordneter Schutzschalter in jeweils einem Schaltkreis 3, 4, 5 vorgesehen. Die Schaltkreise 3, 4, 5 liegen zueinander parallel. Über einen Schutzschalter ESS-A1, ESS-A2 bis ESS-Aa ist jeder Schaltkreis 3, 4, 5 an die Versorgungsspannung $U_n$ des Netzteils 1 angeschlossen.

In Fig. 1 sind die Schaltkreise 4 und 5 nur schematisch angedeutet; am Beispiel des Schaltkreises 3 wird die Erfindung nachstehend erläutert.

Dem übergeordneten Schutzschalter ESS-A1 der oberen Ebene 7 sind im Ausführungsbeispiel mehrere untergeordnete Schutzschalter ESS-B1, ESS-B2 bis ESS-Ba (a = 3, 4, ..., n) einer unteren Ebene 8 nachgeordnet. Die untergeordneten Schutzschalter ESS-B1, ESS-B2 bis ESS-Ba der unteren Ebene 8 liegen zueinander insbesondere parallel an dem ersten übergeordneten Schutzschalter ESS-A1 der oberen Ebene 7. Jeder untergeordnete Schutzschalter ESS-B1, ESS-B2 bis ESS-Ba ist mit einer ihm zugeordneten Einzellast B1, B2, ⋯, Ba (a = 3, 4, ..., n) verbunden. So stellt der elektronische Schutzschalter ESS-A1 den untergeordneten elektronischen Schutzschaltern ESS-B1, ESS-B2 bis ESS-Ba die Versorgungsspannung $U_{A1}$ zur Verfügung.

Die Schaltanordnung ist so ausgebildet, dass am Eingang 20 des übergeordneten Schutzschalters ESS-A1 der oberen Ebene 7 die Versorgungsspannung $U_n$ angelegt ist. Der Ausgang 21 des übergeordneten Schutzschalters ESS-A1 stellt die Versorgungsspannung $U_{A1}$ zur Verfügung und ist mit dem Eingang 30 des ersten untergeordneten Schutzschalters ESS-B1 der unteren Ebene 8 verbunden. An dem Ausgang 31 des ersten untergeordneten Schutzschalters ESS-B1 steht eine Versorgungsspannung $U_{B1}$ zur Verfügung. Die Versorgungsspannung speist die Einzellast B1. Der Stromkreis 3 zum Netzteil 1 ist über den Nullleiter 6 geschlossen.

In entsprechender Weise sind weitere untergeordnete Schutzschalter ESS-B2 bis ESS-Ba der unteren Ebene 8 parallel zum ersten untergeordneten Schutzschalter ESS-B1 an den übergeordneten Schutzschalter ESS-A1 der oberen Ebene 7 angeschlossen. Jeder weitere untergeordnete Schutzschalter ESS-B1, ESS-Ba stellt eine Versorgungsspannung $U_{B2}$ bis $U_{Ba}$ zur Verfügung und ist elektrisch mit jeweils einer Einzellast B2 bis Ba verbunden.

In Fig. 2 ist der grundsätzliche Aufbau eines Schutzschalters ESS wiedergegeben. Der Hardwareaufbau des in Fig. 2 wiedergegebenen Schutzschalters entspricht im Grundaufbau sowohl einem übergeordneten Schutzschalter ESS-Aa der oberen Ebene 7 und vorzugsweise auch dem eines untergeordneten Schutzschalters ESS-Ba einer unteren Ebene 8. Zwischen dem Eingang 20 bzw. 30 und dem Ausgang 21 bzw. 31 ist ein Strompfad 11 ausgebildet, der zweckmäßig über eine Schmelzsicherung 12 abgesichert sein kann. Im Strompfad 11 ist ferner ein elektronisches Stellglied 13 angeordnet, welches insbesondere nach Art eines Schalters den Strompfad 11 schließt oder sperrt. Das elektronische Stellglied 13 ist insbesondere ein Halbleiterelement wie ein MOSFET oder dergleichen Leistungsbauteil. Das elektronische Stellglied 13 kann über eine Ansteuervorrichtung 14 schließen und damit leitend geschaltet oder öffnen und damit sperrend geschaltet werden. Aufgrund der Ausbildung als elektronisches Stellglied 13 sind auch Zwischenstellungen möglich, wodurch der Strom im Strompfad 11 auch gesteuert werden kann.

Die Ansteuervorrichtung 14 des elektronischen Stellgliedes 13 ist mit einer Steuereinheit 15 verbunden, die insbesondere als Mikrocontroller ausgebildet sein kann. Die Steuereinheit 15 stellt über die Ansteuervorrichtung 14 das Stellglied 13 insbesondere in einen sperrenden Zustand oder einen leitenden Zustand. In dem Strompfad 11 sperrenden Zustand ist das Stellglied 13 geöffnet; ist das Stellglied 13 geschlossen, wird ein Laststrom durch den elektronischen Schutzschalter ESS zugelassen.

Der Steuereinheit 15 ist das Ausgangssignal eines Strommessers 16 zugeführt, der mit einem im Strompfad 11 angeordneten Stromsensor 17 verbunden ist. Der Stromsensor 17 kann elektrisch in den Strompfad 11 geschaltet sein oder als Hall-Sensor den Strom im Strompfad 11 berührungslos messen.

Zweckmäßig wird über einen Spannungsmesser 17 der Potenzialunterschied U zwischen dem Eingang 20 bzw. 30 und dem Ausgang 21 bzw. 31 des Schutzschalters ESS erfasst. Das Ausgangssignal des Strommessers 16 sowie das Ausgangssignal des Spannungsmessers 17 sind der Steuereinheit 15 zugeführt, welche die zugeführten Signale vorteilhaft über den Mikrocontroller verarbeitet. Die Steuereinheit 15 überwacht den im Strompfad 11 fließenden Strom I und betätigt in Abhängigkeit des Ergebnisses der Überwachung über die Ansteuervorrichtung 14 das Stellglied 13. Wird zum Beispiel ein vorgegebener maximaler Strom $I_{max}$ als vorgegebener Auslösewert überschritten, wird über die Ansteuerung 14 das Stellglied 13 geöffnet und der Strompfad 11 gesperrt. Der Strom I ist unterbrochen.

Durch die Verknüpfung des gemessenen Stroms I und der gemessenen Spannung U lässt sich der Zustand einer an den elektronischen Schutzschalter ESS angeschlossenen Last ermitteln.

In besonderer Ausgestaltung der Erfindung sind die elektronischen Schutzschalter ESS insbesondere mit einem Kommunikationsmodul 19 versehen. Das Kommunikationsmodul 19 kommuniziert mit dem Mikrocontroller der Steuereinheit 15. Die Kommunikationsverbindung 9 ist eine bidirektionale Verbindung, d. h. es können sowohl Daten vom Mikrocontroller der Steuereinheit 15 über das Kommunikationsmodul 19 nach außen weitergegeben werden als auch Daten von außen über das Kommunikationsmodul 19 dem Mikrocontroller der Steuereinheit 15 eingespielt werden. Durch das Kommunikationsmodul 19 werden zusätzliche Funktionalitäten möglich, zum Beispiel die Ferndiagnose eines Schutzschalters ESS, eine Fernansteuerung des Schutzschalters ESS und/oder dergleichen Funktionalität.

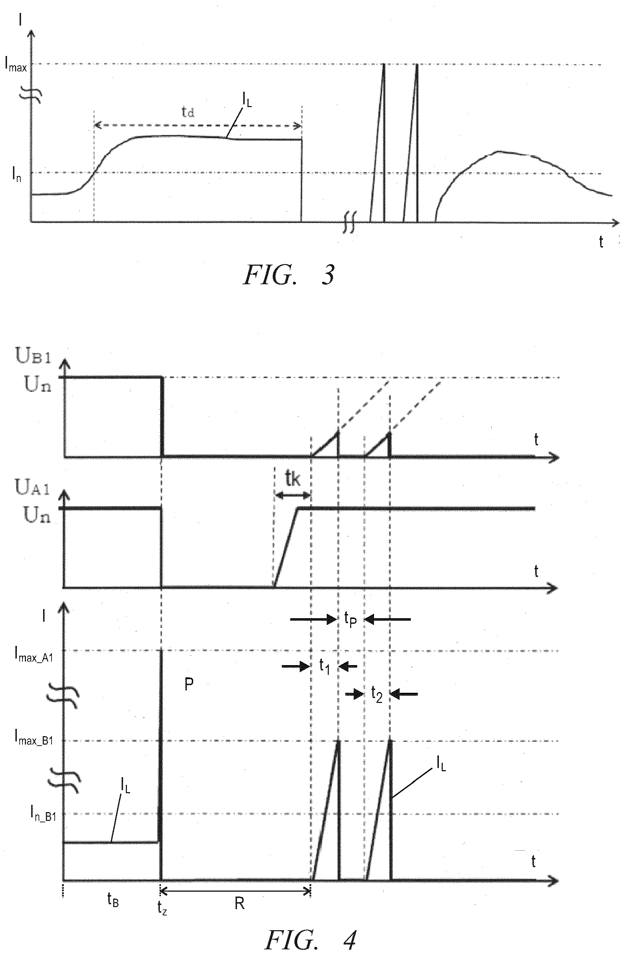

In Fig. 3 ist der Verlauf eines Stroms I über der Zeit t in einem Schaltkreis, zum Beispiel in dem Schaltkreis 3, beispielhaft wiedergegeben. Ein Abschaltkriterium für einen elektronischen Schutzschalter ESS kann zum Beispiel ein Laststrom $I_L$ sein, der für einen vorgegebenen Zeitraum $t_d$ einen Nennstrom $I_n$ des elektronischen Schutzschalters ESS überschreitet. Ein weiteres Kriterium kann der Faktor der Überschreitung des Nennstroms $I_n$ sein; je größer der Faktor der Überschreitung des Nennstroms $I_n$ ist, desto kleiner ist die Zeit bis zur Abschaltung des Schutzschalters ESS. Steigt der Laststrom $I_L$ z.B. als Lastpeak P über einen vorgegebenen Maximalstrom $I_{max}$ an, wird der elektronische Schutzschalter ESS ohne Ablauf einer Zeit sofort abgeschaltet. Die Überschreitung des Maximalstroms $I_{max}$ muss keine vorgegebene Zeitspanne anhalten.

Die Inbetriebnahme der Schaltungsanordnung 10 gemäß Fig. 1 ist schematisch in Fig. 4 wiedergegeben. Im Schaubild wird zunächst davon ausgegangen, dass in der Schaltungsanordnung 10 in einem Zeitraum $t_B$ die Versorgungsspannungen $U_n$, $U_{A1}$, und $U_{B1}$ anliegen und ein Laststrom $I_L$ von dem Netzteil 1 über den übergeordneten Schutzschalter ESS-A1 der oberen Ebene 7 und den untergeordneten Schutzschalter ESS-B1 der unteren Ebene 8 zur Last B1 fließt. Während dem Betrieb der Schaltungsanordnung 10 und dem Betrieb der Last B1 tritt im Zeitpunkt tz ein Ereignis auf, welches den Laststrom $I_L$ sowohl über den Auslösewert $I_{max\_B1}$ des untergeordneten elektronischen Schutzschalters ESS-B1 als auch über den Auslösewert $I_{max\_A1}$ des übergeordneten elektronischen Schutzschalters ESS-A1 ansteigen lässt. Als Reaktion löst sowohl der untergeordnete elektronische Schutzschalter ESS-B 1 als auch der übergeordnete elektronische Schutzschalter ESS-A1 aus.

Für den übergeordneten Schutzschalter ESS-A1 der oberen Ebene 7 müssen gegenüber dem untergeordneten Schutzschalter ESS-B (ESS-B fasst ESS-B 1, ESS-B2 und ESS-Ba zusammen) der unteren Ebene die folgenden Beziehungen gelten:

$$I_{max\_A1} > I_{n\_Ba} + I_{n\_B2} + I_{max\_B1}$$

$$I_{n\_A1} > I_{n\_Ba} + I_{n\_B2} + I_{n\_B1}$$

mit:

| | |
|---|---|
| $I_{max\_A1}$ | = Maximalstrom oder der erste Auslösewert im übergeordneten Schutzschalter A1; |
| $I_{max\_B1}$ | = Maximalstrom oder der zweite Auslösewert im untergeordneten Schutzschalter B1; |
| $I_{n\_B2}$ | = Nennstrom im untergeordneten Schutzschalter B2; |
| $I_{n\_Ba}$ | = Nennstromsumme in anderen untergeordneten Schutzschaltern Ba |
| $I_{n\_A1}$ | = Nennstrom im übergeordneten Schutzschalter A1 |
| $I_{n\_B1}$ | = Nennstrom im untergeordneten Schutzschalter B1 |

Mit diesen Einstellungen wird im Normalfehlerfall beim B1 immer nur ESS-B1 ausgelöst. In einem seltenen extremen Fehlerfall kann der Kurzschlussstrom so schnell ansteigen, dass $I_{max\_A1}$ auch erreicht wird, bevor ESS-B1 reagiert.

Unter der Annahme, dass es zu einem Zeitpunkt nur einen Fehler in allen Lastkreisen Last B1, Last B2 und Last Ba gibt, ist eine gute Selektivität gewährleistet.

Jeder Schutzschalter ESS-A1 und ESS-B1 weist eine Ansprechzeit auf, die zwischen einem Überschreiten des Auslösewertes und dem Öffnen des Stellglieds 13 verstreicht, um den Strompfad 11 zu sperren und einen Stromfluss zu unterbinden. Diese Ansprechzeit eines Schutzschalters ESS kann zweckmäßig über die Steuereinheit 15 eingestellt werden. Die Anordnung ist so getroffen, dass die Ansprechzeit eines übergeordneten Schutzschalters ESS-A1 der oberen Ebene 7 größer gewählt ist als die Ansprechzeit eines untergeordneten Schutzschalters ESS-B1 der unteren Ebene 8. Durch die unterschiedliche Einstellung der Ansprechzeit soll erreicht werden, dass bei einem Strompeak P zunächst der untergeordnete Schutzschalter ESS-B 1 anspricht und erst dann der übergeordnete Schutzschalter ESS-A1.

Nach der Abschaltung der elektronischen Schutzschalter ESS-A1 und ESS-B1 wird für die Wiederinbetriebnahme der Schaltungsanordnung nach einer Ruhepause R zunächst der übergeordnete elektronische Schutzschalter ESS-A1 der oberen Ebene 7 in Betrieb genommen. Das Stellglied 13 des übergeordneten elektronischen Schutzschalters ESS-A1 der oberen Ebene 7 schließt den Strompfad 11, so dass am Ausgang 21 des übergeordneten Schutzschalters ESS-A1 die Versorgungsspannung $U_{A1}$ wieder auf die Nennspannung $U_n$ ansteigt, wie in dem mittleren Diagramm wiedergegeben ist. Während dieser Einschaltzeit $t_k$ bleiben

die Stellglieder 13 der untergeordneten elektronischen Schutzschalter ESS-B1, ESS-B2, ···, ESS-Ba offen. In den Strompfaden 11 der untergeordneten elektronischen Schutzschalter ESS-B1, ESS-B2, ···, ESS-Ba der unteren Ebene 8 fließt kein Laststrom. Der Strompfad 11 ist unterbrochen.

Nach Ablauf der Einschaltzeit $t_k$ wird ein erster untergeordneter elektronischer Schutzschalter ESS-B1 der unteren Ebene 8 für eine Einschaltzeit $t_1$ in Betrieb genommen und der ansteigende Laststrom $I_L$ im Strompfad 11 des untergeordneten elektronischen Schutzschalters ESS-B 1 überwacht. Steigt der Laststrom $I_L$ durch den untergeordneten elektronischen Schutzschalter ESS-B1 über den Auslösewert $I_{max\_B1}$ des untergeordneten Schutzschalters ESS-B1 an, wird über das Stellglied 13 im Strompfad 11 des untergeordneten Schutzschalters ESS-B1 der Strompfad 11 unterbrochen, indem das Stellglied 13 öffnet. Der Laststrom $I_L$ fällt wieder auf Null.

Nach Ablauf einer Pausenzeit $t_P$ wird der gleiche elektronische Schutzschalter ESS-B1 erneut in Betrieb genommen, indem über die Steuereinheit 15 und die Ansteuerverrichtung 14 das Stellglied 13 erneut geschlossen wird. Im Strompfad 11 des untergeordneten Schutzschalters ESS-B1 wird erneut ein Laststrom $I_L$ fließen, der über der Zeit t ansteigt. Ergibt sich ein erneutes Ansteigen über den eingestellten Auslösewert $I_{max\_B1}$ des untergeordneten Schutzschalters ESS-B1 löst die Steuereinheit 15 erneut Öffnen des Stellgliedes 13 aus. Der Strompfad 11 wird geöffnet. Der Laststrom $I_L$ fällt wieder auf Null.

Nachdem bei wiederholtem Einschalten des untergeordneten Schutzschalters ESS-B1 jeweils ein Überschreiten des vorgegebenen Auslösewertes $I_{max\_B1}$ auftritt, kann davon ausgegangen werden, dass im Lastzweig des untergeordneten Schutzschalters ESS-B1 ein Kurzschluss vorliegt, welcher eine Inbetriebnahme des untergeordneten Schutzschalters ESS-B1 verhindert. Der elektronische Schutzschalter ESS-B1 bleibt ausgeschaltet.

Nunmehr wird der nächste elektronische Schutzschalter ESS-B2 der untergeordneten Ebene 8 in Betrieb genommen und in gleicher Weise wie vorstehend beschrieben mehrfach eingeschaltet, um festzustellen, ob in den Einschaltzeiten $t_1$, $t_2$ ein Ansteigen des Laststroms $I_L$ über den vorgegebenen Auslösewert $I_{max\_B1}$ auftritt. Tritt auch nach 2-maligem, insbesondere 3-maligem Einschalten des elektronischen Schutzschalters ESS-B2 kein Ansteigen des Laststroms $I_L$ über den Auslösewert $I_{max\_B1}$ auf, wird der Schutzschalter ESS-B2 bleibend in Betrieb genommen.

Auf die gleiche Weise werden die weiteren Schutzschalter ESS-Ba der unteren Ebene 8 nacheinander in Betrieb genommen.

Über die Kommunikationsmodule 19 kann ein einen Kurzschluss detektierender elektronischer Schutzschalter ESS, im vorstehenden Beispiel der untergeordnete elektronische Schutzschalter ESS-B1 der unteren Ebene 8, den Ausfall des Lastkreises einer Meldeeinrichtung mitteilen oder über entsprechende Anzeigevorrichtungen anzeigen. Ein während dem Betrieb auftretender Kurzschluss in einem Lastkreis der unteren Ebene 8 kann zwar im Extremfall zum Auslösen des übergeordneten elektronischen Schutzschalters ESS-Aa führen und die Gesamtlast 2 abschalten. Durch die selektive Kaskadierung ist jedoch eine Wiederinbetriebnahme ohne weiteres möglich, wobei während der Inbetriebnahme der Lastkreis mit Kurzschluss sicher erkannt und abgeschaltet werden kann, ohne dass die anderen elektronischen Schutzschalter ESS-Ba der unteren Ebene 8 abgeschaltet bleiben. Eine teilweise Wiederinbetriebnahme der Schaltungsanordnung 10 ist funktionssicher gewährleistet.

Es ist vorteilhaft vorgesehen, die Schutzschalter ESS-A1, ESS-A2, ···, ESS-Aa der oberen Ebene 7 und die Schutzschalter ESS-B 1, ESS-B2, ···, ESS-Ba der unteren Ebene 8 gleich auszubilden. Bevorzugt sind die Schutzschalter hardwaremäßig identisch ausgebildet und durch entsprechende Einstellung der Steuereinheit als übergeordnete Schutzschalter ESS-Aa oder untergeordnete Schutzschalter ESS-Ba zu verwenden. Insbesondere ist es vorteilhaft, eine softwaremäßige Adaptierung einer Steuereinheit der Schutzschalter ESS vorzunehmen.

## Patentansprüche

1.  Schaltungsanordnung zur Spannungsversorgung einer aus Einzellasten (B1, B2, ···, Ba) zusammengesetzten Gesamtlast (2),

    a. mit einem Netzteil (1) zur Bereitstellung einer Versorgungsspannung ($U_n$),
    b. mit einem zwischen der Gesamtlast (2) und dem Netzteil (1) angeordneten ersten elektronischen Schutzschalter (ESS-A1) mit einem Strompfad (11) zwischen seinem Eingang (20) und seinem Ausgang (21),
    c. und mit einem im Strompfad (11) des ersten elektronischen Schutzschalters (ESS-A1) angeordneten elektronischen Stellglied (13), das ausgebildet ist, den Strompfad (11) zu schließen und einen Laststrom ($I_L$) zuzulassen oder den Strompfad (11) zu öffnen und den Laststrom ($I_L$) zu sperren,
    d. und mit einer dem übergeordneten elektronischen Schutzschalter (ESS-A1) zugeordneten Steuereinheit (15), die über eine Ansteuervorrichtung (14) mit dem elektronischen Stellglied (13) verbunden und ausgebildet ist, das Stellglied (13) anzusteuern, um den Strompfad (11) zu öffnen und den Laststrom ($I_L$) zu sperren, wenn der Laststrom ($I_L$) zwischen dem Eingang (20) und dem Ausgang (21) des ersten elektronischen Schutzschalters (ESS-A1) über einen vorgegebenen ersten Auslösewert ($I_{max\_A1}$) ansteigt,

**dadurch gekennzeichnet,**

e. dass der erste elektronische Schutzschalter (ESS-A1) als übergeordneter Schutzschalter (ESS-A1) ausgebildet ist, dem zumindest zwei weitere untergeordnete elektronische Schutzschalter (ESS-B1, ESS-B2) nachgeordnet sind,
f. dass der untergeordnete Schutzschalter (ESS-B1, ESS-B2) zwischen seinem Eingang (30) und seinem Ausgang (31) einen Strompfad (11) mit einem Stellglied (13) aufweist,
g. und das Stellglied (13) des untergeordneten elektronischen Schutzschalters (ESS-B1, ESS-B2) ausgebildet ist, den Strompfad (11) des untergeordneten elektronischen Schutzschalters (ESS-B1, ESS-B2) zu schließen und einen Laststrom ($I_L$) zuzulassen oder den Strompfad (11) zu öffnen und den Laststrom ($I_L$) zu sperren,
h. und mit einer dem untergeordneten elektronischen Schutzschalter (ESS-B1, ESS-B2) zugeordneten Steuereinheit (15), die über eine Ansteuervorrichtung (14) mit dem elektronischen Stellglied (13) verbunden und ausgebildet ist, das Stellglied (13) anzusteuern, um den Strompfad (11) zu öffnen, wenn der Laststrom ($I_L$) zwischen dem Eingang (30) und dem Ausgang (31) des untergeordneten elektronischen Schutzschalters (ESS-B1, ESS-B2) über einen vorgegebenen zweiten Auslösewert ($I_{max\_B1}$) ansteigt,
i. und der Eingang (30) des untergeordneten Schutzschalters (ESS-B1, ESS-B2) an den Ausgang (21) des übergeordneten Schutzschalters (ESS-A1) und die Einzellast (B1, B2) an dem Ausgang (31) des untergeordneten Schutzschalters (ESS-B1, ESS-B2) angeschlossen ist,
j. und dass der zweite Auslösewert ($I_{max\_B1}$) des untergeordneten elektronischen Schutzschalters (ESS-B1, ESS-B2) kleiner ist als der erste Auslösewert ($I_{max\_A1}$) des übergeordneten elektronischen Schutzschalters (ESS-A1),
k. und die Steuereinheiten (15) der Schutzschalter ausgebildet sind, nach einem Auslösen des übergeordneten Schutzschalters (ESS-A1) zunächst den übergeordneten Schutzschalter (ESS-A1) einzuschalten und nach Ablauf einer Zeitspanne ($t_k$) sukzessive die untergeordneten Schutzschalter (ESS-B1, ESS-B2) nacheinander einzuschalten.

2. Schaltungsanordnung nach Anspruch 1, **dadurch gekennzeichnet, dass** jeder Schutzschalter (ESS) eine Ansprechzeit zwischen einem Überschreiten eines Auslösewertes ($I_{max\_A1}$, $I_{max\_B1}$) und dem Öffnen des Strompfades (11) und Sperren des Laststroms ($I_L$) aufweist, und dass die Ansprechzeit eines untergeordneten Schutzschalters (ESS-B1, ESS-B2) kleiner gewählt ist als die Ansprechzeit eines übergeordneten Schutzschalters (ESS-A1).

3. Schaltungsanordnung nach Anspruch 1, **dadurch gekennzeichnet, dass** jeder Schutzschalter (ESS) mit einem Kommunikationsmodul (19) versehen ist.

4. Schaltungsanordnung nach Anspruch 1, **dadurch gekennzeichnet, dass** im Strompfad (11) zwischen dem Eingang (20, 30) und dem Ausgang (21, 31) eines elektronischen Schutzschalters (ESS) ein Stromsensor (17) mit einem Strommesser (16) zur Erfassung des Laststroms ($I_L$) angeordnet ist.

5. Schaltungsanordnung nach Anspruch 1, **dadurch gekennzeichnet, dass** zwischen dem Eingang (20, 30) und dem Ausgang (21, 31) eines elektronischen Schutzschalters (ESS) ein Spannungsmesser (18) zur Erfassung des Potentialunterschieds (U) zwischen dem Eingang (20, 30) und dem Ausgang (21, 31) angeordnet ist.

6. Schaltungsanordnung nach Anspruch 4 und 5, **dadurch gekennzeichnet, dass** der Strommesser (16) und/oder der Spannungsmesser (18) mit der Steuereinheit (15) verbunden sind, und die Steuereinheit (15) ausgebildet ist, zum Öffnen oder Schließen des Strompfades (11) über die Ansteuervorrichtung (14) das zwischen dem Eingang (20, 30) und dem Ausgang (21, 31) angeordnete Stellglied (13) eines Schutzschalters (ESS) zu betätigen.

7. Verfahren zur Inbetriebnahme einer Schaltungsanordnung zur Spannungsversorgung einer aus Einzellasten (B1, B2, ⋯, Ba) zusammengesetzten Gesamtlast (2), wobei die Schaltungsanordnung (10) zumindest enthält:

(a) ein Netzteil (1) zur Bereitstellung einer Versorgungsspannung ($U_n$),
(b) einen übergeordneten elektronischen Schutzschalter (ESS-A1) zwischen der Gesamtlast (2) und dem Netzteil (1) sowie mit einem im Strompfad (11) zwischen dem Eingang (20) und dem Ausgang (21) des ersten elektronischen Schutzschalters (ESS-A1) angeordneten elektronischen Stellglied (13),
(c) eine Steuereinheit (15) des übergeordneten elektronischen Schutzschalters (ESS-A1), die ausgebildet ist, über eine Ansteuervorrichtung (14) das elektronische Stellglied (13) im Strompfad (11) des übergeordneten elektronischen Schutzschalters (ESS-A1) zu öffnen und den Laststrom (I) zu sperren, wenn der Strom (I) im Strompfad (11) des übergeordneten elektronischen Schutzschalters (ESS-A1) einen vorgegebenen ersten Auslösewert ($I_{m\_A1}$) übersteigt,

(d) zumindest zwei mit jeweils einer Einzellast (B1, B2) verbundene untergeordnete elektronische Schutzschalter (ESS-B1, ESS-B2),

(e) wobei jeder untergeordnete elektronische Schutzschalter (ESS-B1, ESS-B2) zwischen dem übergeordneten elektronischen Schutzschalter (ESS-A1) und einer Einzellast (B1, B2) vorgesehen ist,

(f) und jeder untergeordnete elektronische Schutzschalter ( ) ein im Strompfad (11) zwischen seinem Eingang (30) und seinem Ausgang (31) angeordnetes elektronisches Stellglied (13) aufweist,

(g) eine Steuereinheit (15) des untergeordneten elektronischen Schutzschalters (ESS-B1, ESS-B2), die ausgebildet ist, über eine Ansteuervorrichtung (14) das elektronische Stellglied (13) im Strompfad (11) des untergeordneten elektronischen Schutzschalters (ESS-B1, ESS-B2) zu öffnen und den Laststrom (I) zu sperren, wenn der Laststrom (I) im Strompfad (11) des untergeordneten elektronischen Schutzschalters (ESS-B1, ESS-B2) einen vorgegebenen zweiten Auslösewert ($I_{m\_B1}$) übersteigt,

(h) wobei der erste Auslösewert ($I_{m\_A1}$) des übergeordneten elektronischen Schutzschalters (ESS-A1) größer ist als der zweite Auslösewert ($I_{m\_B1}$) des untergeordneten elektronischen Schutzschalters (ESS-B1, ESS-B2),

(i) und zur Inbetriebnahme der Schaltungsanordnung (10) zunächst das übergeordnete elektronische Stellglied (13) des übergeordneten Schutzschalters (ESS-A1) den Strompfad (11) schließt, während die Stellglieder (13) der untergeordneten elektronischen Schutzschalter (ESS-B1, ESS-B2) ihren jeweiligen Strompfad (11) öffnen und den Laststrom (I) sperren,

(j) dass nach einer ersten Zeitspanne ($t_k$) das elektronische Stellglied (13) eines ersten untergeordneten Schutzschalters (ESS-B1) seinen Strompfad (11) für eine Einschaltzeit ($t_1$) schließt und einen Laststrom ($I_L$) zulässt, wobei der Laststrom ($I_L$) im Strompfad (11) zwischen dem Eingang (30) und dem Ausgang (31) des untergeordneten Schutzschalters (ESS-B1) während der Einschaltzeit ($t_1$) überwacht wird,

(k) und bei einem Überschreiten des Laststroms ($I_L$) im Strompfad (11) des ersten untergeordneten Schutzschalters (ESS-B1) über den zweiten Auslösewert ($I_{max\_B1}$) das Stellglied (13) den Strompfad (11) öffnet und den Laststrom ($I_L$) sperrt, und bei einem Unterschreiten des zweiten Auslösewertes ($I_{max\_B1}$) der Strompfad (11) geschlossen bleibt, wenn der Laststrom ($I_L$) kleiner ist als ein Nennstrom ($I_{n\_B1}$).

(l) und die Verfahrensschritte j) und k) nacheinander für alle dem übergeordneten elektronischen Schutzschalter (ESS-A1) untergeordneten elektronischen Schutzschalter (ESS-B1, ESS-B2) ausgeführt wird.

8. Verfahren nach Anspruch 1,
**dadurch gekennzeichnet, dass** mehrere aufeinander folgende Einschaltzeiten ($t_1$, $t_2$) vorgesehen sind, wobei zwischen aufeinander folgenden Einschaltzeiten ($t_1$, $t_2$) eine Pause ($t_P$) vorgesehen ist.

9. Verfahren nach Anspruch 1,
**dadurch gekennzeichnet, dass** der untergeordnete Schutzschalter (ESS-B1, ESS-B2) erst dann bleibend eingeschaltet wird, wenn in aufeinander folgenden Einschaltzeiten ($t_1$, $t_2$) der Laststrom den Auslösewert ($I_{max\_B1}$) nicht überschreitet.

10. Verfahren nach Anspruch 1,
**dadurch gekennzeichnet, dass** drei aufeinander folgende Einschaltzeiten vorgesehen sind.

11. Verfahren nach Anspruch 1,
**dadurch gekennzeichnet, dass** jeder Schutzschalter (ESS-Aa, ESS-Ba) eine Ansprechzeit zwischen einem Überschreiten eines Auslösewertes ($I_{max\_A1}$, $I_{max\_B1}$) und dem Öffnen des Strompfades (11) und Sperren des Laststroms ($I_L$) aufweist, und dass die Ansprechzeit eines untergeordneten Schutzschalters (ESS-Ba) kleiner gewählt ist als die Ansprechzeit eines übergeordneten Schutzschalters (ESS-Aa).

12. Verfahren nach Anspruch 1,
**dadurch gekennzeichnet, dass** ein Schutzschalter (ESS-Aa, ESS-Ba) mit einem Kommunikationsmodul (19) versehen ist und die Schutzschalter (ESS-Aa, ESS-Ba) über die Kommunikationsmodule (19) Daten austauschen.

FIG. 1

FIG. 2

*FIG. 3*

*FIG. 4*

Europäisches
Patentamt

European
Patent Office

Office européen
des brevets

# EUROPÄISCHER RECHERCHENBERICHT

Nummer der Anmeldung

EP 20 17 7176

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2007/165340 A1 (BARBOUR ERSKINE R [US] ET AL) 19. Juli 2007 (2007-07-19) * Absätze [0027], [0029], [0034], [0035], [0039] * ----- | 1-12 | INV. H02H3/06 H02H3/07 H02H7/30 |
| Y | US 10 483 750 B2 (EATON IND NETHERLANDS BV [NL]; EATON INTELLIGENT POWER LTD [IE]) 19. November 2019 (2019-11-19) * das ganze Dokument * ----- | 1-12 | ADD. H02H3/033 H02H3/093 |
| Y | US 2020/136375 A1 (SCHIERLING HUBERT [DE] ET AL) 30. April 2020 (2020-04-30) * Absätze [0056], [0057], [0068]; Abbildung 1 * ----- | 1,2,7,11 | |
| Y | EP 0 554 553 A2 (TOSHIBA KK [JP]) 11. August 1993 (1993-08-11) * Spalte 1, Zeilen 6-34 * ----- | 1-11 | |
| | | | RECHERCHIERTE SACHGEBIETE (IPC) |
| | | | H02H |

Der vorliegende Recherchenbericht wurde für alle Patentansprüche erstellt

| Recherchenort | Abschlußdatum der Recherche | Prüfer |
|---|---|---|
| München | 13. Oktober 2020 | Trifonov, Antoniy |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

   ...............................................................

& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 17 7176

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-2020

| Im Recherchenbericht angeführtes Patentdokument | Datum der Veröffentlichung | Mitglied(er) der Patentfamilie | Datum der Veröffentlichung |
|---|---|---|---|
| US 2007165340 A1 | 19-07-2007 | CN 101326695 A<br>EP 1952499 A1<br>US 2007165340 A1<br>WO 2007056564 A1 | 17-12-2008<br>06-08-2008<br>19-07-2007<br>18-05-2007 |
| US 10483750 B2 | 19-11-2019 | CN 106663937 A<br>EP 3161920 A1<br>GB 2527534 A<br>US 2017163023 A1<br>WO 2015197471 A1 | 10-05-2017<br>03-05-2017<br>30-12-2015<br>08-06-2017<br>30-12-2015 |
| US 2020136375 A1 | 30-04-2020 | CN 110462957 A<br>EP 3379670 A1<br>EP 3583671 A1<br>US 2020136375 A1<br>WO 2018172135 A1 | 15-11-2019<br>26-09-2018<br>25-12-2019<br>30-04-2020<br>27-09-2018 |
| EP 0554553 A2 | 11-08-1993 | EP 0554553 A2<br>KR 930015238 A<br>US 5341268 A | 11-08-1993<br>24-07-1993<br>23-08-1994 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011120466 A1